# EUROPÄISCHE PATENTSCHRIFT

(11) **EP 0 709 266 B1**
(45) Veröffentlichungstag und Bekanntmachung des Hinweises auf die Patenterteilung: **28.01.1998**
(21) Anmeldenummer: 95116790.7
(22) Anmeldetag: 25.10.1995
(51) Int. Cl.: B60R 22/46, B60R 22/28

(54) **Gurtaufroller mit integriertem Gurtstraffer und Energiewandler**
Belt retractor with integrated belt pretensioner and energy absorber
Enrouleur de ceinture de sécurité avec tendeur de ceinture et dispositif d'absorption d'énergie intégrés

(30) Priorität: 25.10.1994 DE 4438097
(43) Veröffentlichungstag der Anmeldung: 01.05.1996
(73) Patentinhaber: TRW Occupant Restraint Systems GmbH, 73553 Alfdorf (DE)
(72) Erfinder: Föhl, Artur, D-73614 Schorndorf (DE)
(74) Vertreter: Degwert, Hartmut, Dipl.-Phys.

(56) Entgegenhaltungen:
- EP-A- 0 562 423
- DE-A- 4 227 781

## Beschreibung

Die Erfindung betrifft einen Gurtaufroller, der einen integrierten Gurtstraffer und einen Energiewandler zur Begrenzung der im Anschluß an die Gurtstraffung auftretenden Gurtkraft aufweist, mit einem lasttragenden Rahmen, einer im Rahmen drehbar gelagerten Gurtspule, einem wenigstens gurtbandsensitiven Sperrmechanismus, einem an die Gurtspule ankoppelbaren Strafferantrieb und einem koaxial in der Gurtspule angeordneten Torsionsstab, dessen erstes Ende drehfest mit der Gurtspule und dessen zweites Ende mit einer Kupplungsscheibe drehfest verbunden ist, durch die das zweite Ende des Torsionsstabes gurtbandsensitiv und lasttragend drehfest an den Rahmen ankoppelbar ist.

Ein Gurtaufroller dieser Bauart ist bereits aus der DE 42 27 781 A1 bekannt. Er ist besonders zur Verwendung in Kombination mit einem aufblasbaren Rückhaltesystem (Airbag) geeignet. Nach erfolgter Gurtstraffung wird durch den Torsionsstab die bei der Vorverlagerung des Fahrzeuginsassen auftretende Gurtkraft begrenzt, da der Torsionsstab im Kraftfluß zwischen dem Gurtband und dem Aufrollerrahmen liegt und bei Überschreitung einer vorbestimmten Beanspruchung um seine Achse tordiert wird. Ein Torsionsstab aus weichem Eisen läßt mehrere Umdrehungen ohne Zerstörungsgefahr zu.

Ein solcher Gurtaufroller muß aber alle herkömmlichen Funktionen ohne Einschränkung erfüllen: fahrzeugsensitive und gurtbandsensitive Sperrfunktion im Normalbetrieb, Strafferfunktion bei Erreichen einer bestimmten Auslöseschwelle und volle Funktionsfähigkeit des Sperrmechanismus nach erfolgter Gurtstraffung im Hinblick auf die Möglichkeit eines Folgeunfalls.

Zugleich wird von einem solchen Gurtaufroller eine kompakte Bauform gefordert, die mit geringem technischen Aufwand zu verwirklichen ist. Diese Forderung hat bei dem bekannten Gurtaufroller dazu geführt, daS die Kupplungsscheibe nicht nur zur lasttragenden Ankopplung des Torsionsstabes an den Rahmen des Gurtaufrollers, sondern zugleich zur Ankopplung des Strafferantriebs verwendet wird. Dies hat zur Folge, daß der Torsionsstab auch im Kraftfluß des Strafferantriebs liegt, wodurch dessen Antriebskraft in unerwünschter Weise begrenzt wird.

Durch die Erfindung wird ein Gurtaufroller geschaffen, der sowohl mit einem integrierten Gurtstraffer als auch mit einem Energiewandler zur Begrenzung der Gurtkraft im Anschluß an die Gurtstraffung versehen ist und in einer kompakten, kostengünstig realisierbaren Bauform alle Anforderungen an den Sperrmechanismus erfüllt, insbesondere eine schnell ansprechende fahrzeugsensitive und gurtbandsensitive Sperrfunktion im Normalbetrieb, die vorübergehende Stillsetzung der Funktion des Sperrmechanismus während der Energiewandlung im Anschluß an eine Gurtstraffung sowie die Wiederherstellung der Sperrfunktion im Anschluß an die Energiewandlung. Gemäß der Erfindung ist der Sperrmechanismus mit wenigstens einer an einer Stirnseite der Gurtspule gelagerten Sperrklinke versehen, die in eine sie umgebende Sperrverzahnung am Rahmen einsteuerbar ist, und am zweiten Ende des Torsionsstabes ist eine Steuerscheibe begrenzt drehbar gelagert, wobei die Steuerscheibe zumindest während der Phase der Energiewandlung an der Sperrklinke angreift und sie am Eingreifen in die Sperrverzahnung des Rahmens hindert. Bei dieser Ausbildung des Gurtaufrollers sind effektiv zwei Sperrsysteme vorhanden, eines zur unmittelbaren Sperrung der Gurtspule am Rahmen und ein weiteres zur Sperrung des Torsionsstabes am Rahmen, wobei beide Sperrsysteme auf derselben Seite des Gurtaufrollers angeordnet sind. Dies eröffnet die bei der bevorzugten Ausführungsform vorgesehene Möglichkeit, den Strafferantrieb auf der den Sperrsystemen gegenüberliegenden Seite des Gurtaufrollers anzuordnen, so daß der Strafferantrieb nunmehr unmittelbar an der Gurtspule bzw. an dem mit dieser drehfest gekoppelten Ende des Torsionsstabes angreifen kann. Auf derselben Seite des Gurtaufrollers wird vorzugsweise die Aufwickelfeder des Gurtaufrollers in einer Kassette angeordnet.

Auf derselben Seite wie die beiden Sperrsysteme ist vorzugsweise ferner die Auslösescheibe der fahrzeugsensitiven und gurtbandsensitiven Auslösesensorik am zweiten Ende des Torsionsstabes begrenzt drehbar gelagert. Durch diese Maßnahme ergeben sich kurze und direkte Steuerwege für die Sperrklinke und zugleich eine raumgünstige Unterbringung der fahrzeugsensitiven und gurtbandsensitiven Auslösesensorik.

Im Interesse einer gleichmäßigen Übertragung der Blockierlast von der Gurtspule auf den Rahmen sind an der einen Stirnseite der Gurtspule zwei Sperrklinken vorhanden. Eine noch gleichmäßigere Übertragung der Blockierlast kann erreicht werden, wenn auf der gegenüberliegenden Stirnseite der Gurtspule wenigstens eine weitere Sperrklinke vorgesehen wird, die auf einer die Gurtspule axial durchsetzenden Welle sitzt, deren gegenüberliegendes Ende eine der beiden Sperrklinken auf der ersten Stirnseite der Gurtspule trägt.

Während der Phase der Energiewandlung muß die Funktion des Sperrmechanismus unterbunden werden. Diesem Zweck dient die Steuerscheibe, die bei der bevorzugten Ausführungsform axial neben der die Sperrklinke lagernden Stirnseite der Gurtspule angeordnet ist, während die Kupplungsscheibe axial zwischen der Steuerscheibe und der Auslösescheibe angeordnet ist. Der axiale Abstand zwischen Auslösescheibe und Sperrklinke bzw. Sperrklinken wird durch einen axialen Steuerstift überbrückt, der sich durch Langlöcher in der Kupplungsscheibe und in der Steuerscheibe erstreckt. Zur Verwirklichung der vorübergehenden Hemmung der Funktion des Sperrmechanismus weist bei der bevorzugten Ausführungsform die Sperrklinke einen axial zu der Steuerscheibe abragenden Nocken auf, und die Steuerscheibe ist mit einer sich in Umfangsrichtung erstreckenden Ausnehmung versehen, deren radial äußere Begrenzungswand bei gegen das zweite Ende des Torsionsstabes verdrehter Steuerscheibe den Nocken hintergreift und so die Auslenkung der Sperrklinke verhindert. Damit die Hemmung der Funktion des Sperrmechanismus während der Phase der Energiewandlung andauert, ist bei einer ersten Ausführungsvariante weiterhin vorgesehen, daß die Begrenzungswand am Eintrittsende der Ausnehmung für den Nocken der Sperrklinke eine radial einwärts gerichtete Stufte aufweist, die der Nocken der durch Massenträgheitskräfte ausgelenkt gehaltenen Sperrklinke hintergreift. Bei einer zweiten Ausführungsvariante wird die Steuerscheibe in der verdrehten Relativstellung zur Gurtspule verrastet.

Weitere Vorteile und Merkmale der Erfindung ergeben sich aus der folgenden Beschreibung zweier Ausführungsformen und aus der Zeichnung, auf die Bezug genommen wird. In der Zeichnung zeigen:

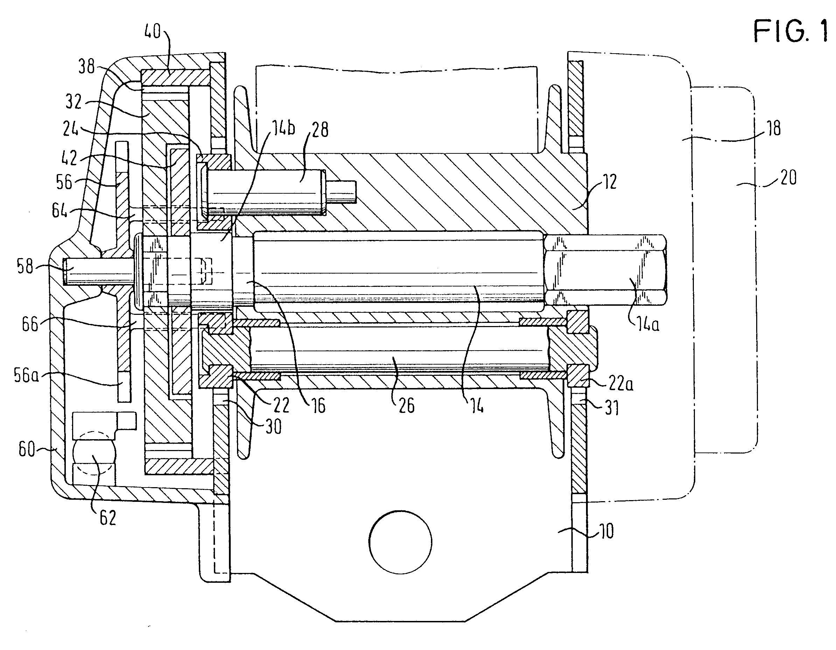

Fig. 1 einen Längsschnitt des Gurtaufrollers;
Fig. 2 eine Draufsicht auf die Sperrelemente des Gurtaufrollers;
Fig. 3 eine Draufsicht auf eine Steuerscheibe, die zur vorübergehenden Hemmung der Sperrfunktion während der Energiewandlung vorgesehen ist;
Fig. 4 eine analoge Draufsicht auf die Steuerscheibe im aktivierten Zustand;
Fig. 5 eine Perspektivansicht einer Federbremse zur Rücklaufdämpfung der Steuerscheibe;
Fig. 6 eine Draufsicht auf die Kupplungsscheibe des dem Torsionsstab zugeordneten Sperrmechanismus; und
Fig. 7a und 7b eine Ausführungsvariante.

In einem U-förmig gebogenen Rahmen 10 ist eine Gurtspule 12 drehbar gelagert. In die hohl ausgebildete Gurtspule 12 ist koaxial ein Torsionsstab 14 eingesetzt, dessen erstes Ende 14a als Mehrkantprofil ausgebildet und drehfest mit der Gurtspule 12 verbunden ist, während das zweite Ende 14b bei 16 drehbar in der Gurtspule 12 gelagert ist. An dem Ende 14a des Torsionsstabes 14 greift ein Strafferantrieb 18, der als bekannt vorausgesetzt und daher nicht näher beschrieben wird, über einen ebenfalls bekannten Kupplungsmechanismus an. Auf derselben Seite des Gurtaufrollers ist ferner eine Federkassette 20 angeordnet, die eine gleichfalls am Ende 14a des Torsionsstabes 14 angreifende Aufrollerfeder aufnimmt.

Auf der gegenüberliegenden Seite des Gurtaufrollers sind an der Stirnseite der Gurtspule 12 zwei Sperrklinken 22, 24 schwenkbar gelagert. Die Sperrklinke 22 ist drehfest auf einer Welle 26 angeschlossen, welche die Gurtspule 12 axial durchsetzt und auf der gegenüberliegenden Stirnfläche der Gurtspule 12 eine weitere, drehfest angeschlossene Sperrklinke 22a trägt. Die Sperrklinke 24 ist auf einem Bolzen 28 schwenkbar gelagert. Die Sperrklinken 22, 22a und 24 sind jeweils von einer Sperrverzahnung 30 bzw. 31 in einer Bohrung eines der beiden seitlichen Schenkel des Rahmens 10 umgeben.

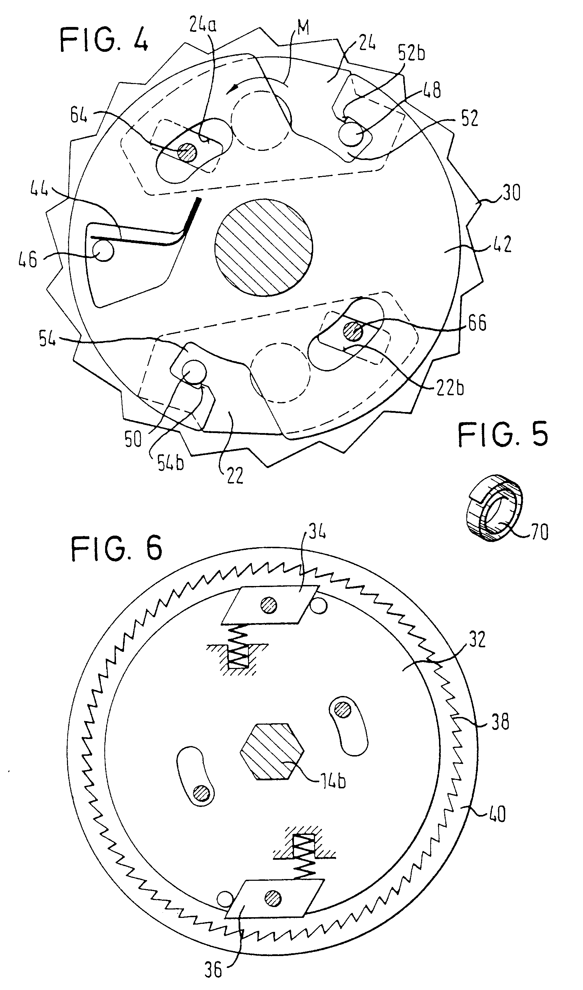

An dem Ende 14b des Torsionsstabes 14 ist eine Kupplungsscheibe 32 drehfest angeschlossen. Wie aus Fig. 6 ersichtlich ist, trägt die Kupplungsscheibe 32 an ihrem Umfang zwei schwenkbar gelagerte Kupplungsklinken 34, 36, die in Ruhestellung gegen einen Anschlag federbelastet und in ihrem Schwerpunkt gelagert sind. Diese Kupplungsklinken 34, 36 sind von einer Sperrverzahnung 38 in einem Ring 40 umgeben, der lasttragend mit einem der beiden seitlichen Schenkel des Rahmens 10 verbunden ist. Die Kupplungsklinken 34, 36 werden auf Drehbeschleunigung der Kupplungsscheibe 32 ansprechend in die Sperrverzahnung 38 eingesteuert.

Zwischen der Kupplungsscheibe 32 und der benachbarten Stirnfläche der Gurtspule 12 ist eine Steuerscheibe 42 begrenzt entgegen der Kraft einer Rückstellfeder 44, die sich an einem axialen Zapfen 46 in der benachbarten Stirnfläche der Gurtspule 12 abstützt, drehbar gelagert. Die Sperrklinken 22, 24 tragen je einen axial in Richtung der Steuerscheibe 42 abragenden Nocken 48 bzw. 50. Diese Nocken 48, 50 befinden sich, solange die Steuerscheibe 42 nicht relativ zum Ende 14b des Torsionsstabes 14 verdreht ist, jeweils am Eintrittsende einer Ausnehmung 52 bzw. 54 der Steuerscheibe 42, welche sich in Umfangsrichtung erstreckt. Die radial äußere Begrenzungswand 52a bzw. 54a der Ausnehmungen 52 bzw. 54 ist im Bereich des Eintrittsendes jeweils mit einer radial einwärts gerichteten Stufe 52b bzw. 54b versehen, die bei relativ zum Ende 14b des Torsionsstabes 14 verdrehter Steuerscheibe 42 hinter den betreffenden Nocken 48 bzw. 50 der entsprechenden, ausgelenkten Sperrklinke 22 bzw. 24 greift und diese im ausgelenkten Zustand hält (Fig. 4).

An dem Ende 14b des Torsionsstabes 14 ist ferner eine Auslösescheibe 56 mittels eines Bundbolzens 58 begrenzt drehbar gelagert. Der Bundbolzen 58 bewirkt die axiale Festlegung der Kupplungsscheibe 32 und der Steuerscheibe 42. Er bildet ferner die Lagerung des Torsionsstabes 14, und folglich der Gurtspule 12, in einem Lagerdeckel 60, der auf dem benachbarten Schenkel des Rahmens 10 aufgesetzt ist.

Die Auslösescheibe 56 ist an ihrem Umfang mit einer Steuerverzahnung 56a versehen, die in bekannter Weise mit einem fahrzeugsensitiven Sensor 62 zusammenwirkt. Zugleich gewährleistet die Auslösescheibe 56 durch ihre Massenträgheit die gurtbandsensitive Ansteuerfunktion, indem sie hinter einer stark beschleunigten Drehung der Gurtspule 12 zurückbleibt. Die Auslösescheibe 56 trägt zwei axial abragende Steuerstifte 64, 66, die durch geeignet geformte Langlöcher in der Kupplungsscheibe 32 und der Steuerscheibe 44 ragen und in fensterartige Öffnungen 22b bzw. 24a der Sperrklinken 22 bzw. 24 eingreifen.

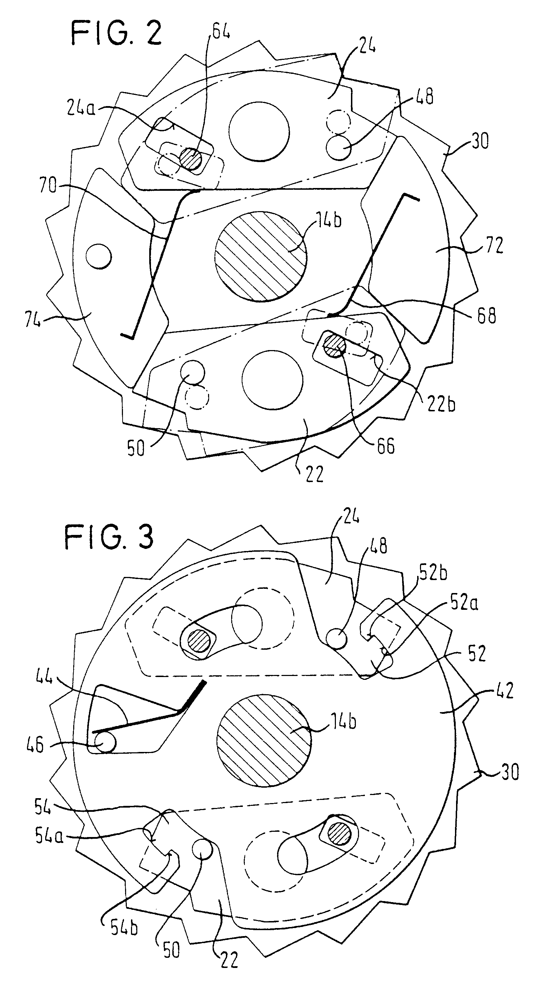

Fig. 2 zeigt mit durchgezogenen Linien die Sperrklinken 22, 24 in ihrer Ruhestellung, in die sie durch Blattfedern 68 bzw. 70 vorbelastet werden. Diese Blattfedern 68, 70 sind in Stütznocken 72 bzw. 74 eingespannt, die auf der betreffenden Stirnfläche der Gurtspule 12 axial abragend vorgesehen sind. In der ausgelenkten Stellung, die in Fig. 2 strichpunktiert eingezeichnet ist, stützen sich die Sperrklinken 22, 24 in Umfangsrichtung an diesen Nocken 74 bzw. 72 ab.

Für den Normalbetrieb bilden die Sperrklinken 22, 22a und 24 mit den Sperrverzahnungen 30, 31, der Auslösescheibe 56, dem fahrzeugsensitiven Sensor 62 und den Steuerstiften 64, 66 einen Sperrmechanismus, der sowohl gurtbandsensitiv als auch fahrzeugsensitiv alle üblichen Forderungen erfüllt. Bei Erreichen einer vorbestimmten Auslöseschwelle tritt der Strafferantrieb 18 in Funktion. Die Gurtspule 12 wird durch den Strafferantrieb 18 in Aufrollrichtung gedreht, um eine Gurtbandlänge bis zu etwa 20 cm auf der Gurtspule 12 aufzurollen. Im Anschluß an die Gurtstraffung tritt aufgrund der plötzlich einsetzenden Vorverlagerung des Fahrzeuginsassen und der im Gurtsystem durch die Straffung gespeicherten Energie eine plötzliche Beschleunigung der Gurtspule 12 in entgegengesetzter Richtung auf. Wegen der hohen Drehbeschleunigung der Gurtspule 12 bleibt die Drehung der Steuerscheibe 42 zurück, wodurch die Nocken 48, 50 in die Ausnehmungen 52, 54 eintreten. Zugleich werden die Kupplungsklinken 34, 36 ausgelenkt, so daß die Kupplungsscheibe 32 drehfest mit dem Rahmen 10 gekoppelt wird. Gurtbandabzug ist nunmehr nur durch Torsion des Torsionsstabes 14 möglich. Die Torsion des Torsionsstabes 14 ist eine plastische Verformung, durch die letztlich eine Begrenzung der Gurtkraft auf unbedenkliche Werte erzielt wird.

Durch geeignete Wahl des Schwerpunkts der Sperrklinken 22, 24 in bezug auf ihre Schwenkachse werden diese während der Drehbeschleunigung der Gurtspule 12 in Abwickelrichtung mit einem Massenträgheitsmoment M (Fig. 4) beaufschlagt, welches bestrebt ist, sie in der ausgelenkten Stellung zu halten. Da aber die radialen Stufen 52b, 54b die Nocken 48, 50 hintergreifen, werden die Sperrklinken 22, 24 effektiv daran gehindert, mit der Sperrverzahnung 30 in Eingriff zu gelangen.

Anschließend lösen sich die Kupplungsklinken 34, 36 aus der Sperrverzahnung 38, die Steuerscheibe 42 wird durch die Rückstellfeder 44 zurückgedreht, und die Nocken 48, 50 treten aus den Ausnehmungen 52, 54 der Steuerscheibe 42 aus, so daß die normale Funktion des gurtbandsensitiven und fahrzeugsensitiven Sperrmechanismus wiederhergestellt ist.

Damit die Steuerscheibe 42 die Sperrklinken 22, 24 nicht zu früh wieder freigibt, wird ihre Rückdrehung durch die in Fig. 5 schematisch gezeigte spiralförmige Bandfeder 70 verzögert. Diese Bandfeder 70 hemmt die Drehung der Steuerscheibe 42 durch Umschlingungsreibung nur in Richtung ihrer Rückdrehung.

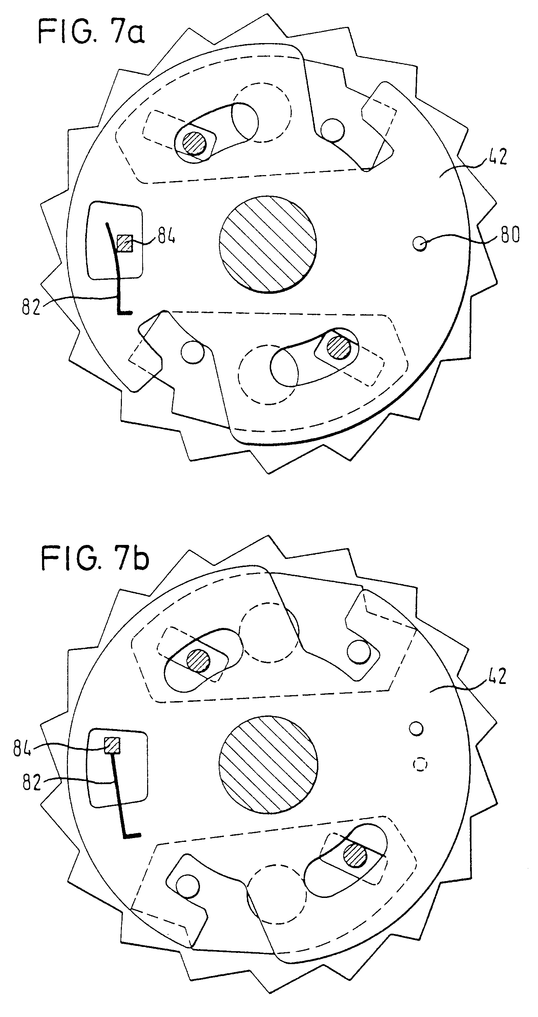

Die in den Fig. 7a und 7b gezeigte Ausführungsvariante wird vorgesehen, wenn nach erfolgter Gurtstraffung bei einem Folgeunfall der Torsionsstab 14 im Kraftfluß verbleiben soll, um die Gurtkraft zu begrenzen. Bei dieser Ausführungsform wird die Steuerscheibe 42 durch einen Scherstift 80 in der in Fig. 7a gezeigten Ruhestellung relativ zur Gurtspule 12 gehalten. Dieser Scherstift 80 wird durch die Trägheitskräfte der Steuerscheibe 42 bei der plötzlichen Rückdrehung der Gurtspule im Anschluß an eine Gurtstraffung abgeschert. Die Steuerscheibe 42 wird dann in die in Fig. 7b gezeigte Relativstellung zur Gurtspule 12 verdreht. In diesem Zustand schnappt eine an der Steuerscheibe 42 eingespannte Blattfeder 82 hinter einen axial von der Gurtspule 12 abstehenden Rastnocken 84, so daß die Steuerscheibe 42 in ihrer relativ zur Gurtspule 12 verdrehten Stellung verrastet wird. Die Sperrklinken 22, 24 sind nun permanent inaktiviert. Der aus Kupplungsscheibe 32, Sperrklinken 34, 36 und dem Ring 40 mit der Sperrverzahnung 38 bestehende Sperrmechanismus bleibt aber in Funktion; bei der gezeigten Ausführungsform spricht er nur gurtbandsensitiv an. Damit auch bei einem zufälligen Auftreffen der Zahnspitzen aufeinander ein sicherer und rascher Eingriff gewährleistet ist, sind die Sperrklinken 34, 36 bezogen auf die Zahnteilung der Sperrverzahnung 38 in Umfangsrichtung gegeneinander geringfügig versetzt.

## Patentansprüche

1. Gurtaufroller, der einen integrierten Gurtstraffer und einen Energiewandler zur Begrenzung der im Anschluß an die Gurtstraffung auftretenden Gurtkraft aufweist, mit einem lasttragenden Rahmen (10), einer im Rahmen drehbar gelagerten Gurtspule (12), einem wenigstens gurtbandsensitiven Sperrmechanismus, einem an die Gurtspule ankoppelbaren Strafferantrieb (18) und einem koaxial in der Gurtspule angeordneten Torsionsstab (14), dessen erstes Ende drehfest mit der Gurtspule und dessen zweites Ende mit einer Kupplungsscheibe (32) drehfest verbunden ist, durch die das zweite Ende des Torsionsstabes (14) gurtbandsensitiv und lasttragend drehfest an den Rahmen (10) ankoppelbar ist, dadurch gekennzeichnet, daß daß der Sperrmechanismus wenigstens eine an einer Stirnseite der Gurtspule (12) gelagerte Sperrklinke (22, 24) aufweist, die in eine sie umgebende Sperrverzahnung (30, 31) am Rahmen (10) einsteuerbar ist, und daß am zweiten Ende (14b) des Torsionsstabes (14) eine Steuerscheibe (42), die zumindest während der Phase der Energiewandlung an der Sperrklinke (22, 24) angreift und sie am Eingreifen in die Sperrverzahnung (30, 31) des Rahmens (10) hindert, begrenzt drehbar gelagert ist.

2. Gurtaufroller nach Anspruch 1, dadurch gekennzeichnet, daß der Sperrmechanismus eine am zweiten Ende (14b) des Torsionsstabes (14) begrenzt drehbar gelagerte Auslösescheibe (56) aufweist, die an der Sperrklinke (22, 24) angreift.

3. Gurtaufroller nach den Ansprüchen 1 und 2, dadurch gekennzeichnet, daß die Steuerscheibe (42) axial neben der die Sperrklinke (22, 24) lagernden Stirnseite der Gurtspule (12) und die Kupplungsscheibe (32) axial zwischen der Steuerscheibe (42) und der Auslösescheibe (56) angeordnet ist.

4. Gurtaufroller nach Anspruch 3, dadurch gekennzeichnet, daß die Auslösescheibe (56) einen axialen Steuerstift (64, 66) aufweist, der sich durch Langlöcher in der Kupplungsscheibe (32) und in der Steuerscheibe (42) erstreckt und an der Sperrklinke (22, 24) angreift.

5. Gurtaufroller nach Anspruch 3 oder 4, dadurch gekennzeichnet, daß die Sperrklinke (22, 24) einen axial zu der Steuerscheibe (42) abragenden Nocken (48, 50) aufweist und die Steuerscheibe (42) eine sich in Umfangsrichtung erstreckende Ausnehmung (52, 54) aufweist, deren radial äußere Begrenzungswand (52a, 54a) bei gegen das zweite Ende des Torsionsstabes (14) verdrehter Steuerscheibe (42) den Nocken (48, 50) hintergreift und so die Auslenkung der Sperrklinke (22, 24) verhindert.

6. Gurtaufroller nach Anspruch 5, dadurch gekennzeichnet, daß die Steuerscheibe (42) durch eine Rückstellfeder (44) in eine Ruhestellung relativ zur Gurtspule (12) vorbelastet ist und daß die radial äußere Begrenzungswand am Eintrittsende der Ausnehmung (52, 54) für den Nocken (48, 50) der Sperrklinke (22, 24) eine radial einwärts gerichtete Stufe (52b, 54b) aufweist, die den Nocken der durch Massenträgheitskräfte ausgelenkt gehaltenen Sperrklinke (22, 24) hintergreift.

7. Gurtaufroller nach Anspruch 5, dadurch gekennzeichnet, daß die Steuerscheibe (42) durch ein bei hoher Drehbeschleunigung nachgebendes Haltemittel (80) in einer Ruhestellung relativ zur Gurtspule (12) gehalten ist und in ihrer relativ verdrehten Stellung durch Rastmittel (82, 84) gehalten wird.

8. Gurtaufroller nach einem der vorstehenden Ansprüche, dadurch gekennzeichnet, daß an der die Sperrklinke (22, 24) lagernden Stirnfläche der Gurtspule (12) ein axial abstehendes Stützelement (72, 74) zur lasttragenden Abstützung der Sperrklinke in Umfangsrichtung gebildet ist.

9. Gurtaufroller nach einem der vorstehenden Ansprüche, dadurch gekennzeichnet, daß an der Kupplungsscheibe (32) wenigstens eine Kupplungsklinke (34, 36) schwenkbar gelagert ist, die von einer mit dem Rahmen (10) lasttragend verbundenen Blockierverzahnung (38) umgeben und durch ihre Massenträgheit in die Blockierverzahnung (38) einsteuerbar ist.

10. Gurtaufroller nach einem der vorstehenden Ansprüche, dadurch gekennzeichnet, daß der Strafferantrieb (18) am ersten Ende (14a) des Torsionsstabes (14) angreift.

11. Gurtaufroller nach Anspruch 6, dadurch gekennzeichnet, daß die Drehung der Steuerscheibe (42) in Gurtband-Aufwickelrichtung durch eine spiralförmige Bandfeder (70) gehemmt ist.

## Claims

1. A belt retractor comprising an integrated belt pretensioner and an energy converter for limiting the belt force occurring after the tensioning of the belt, with a load-bearing frame (10), a belt reel (12) rotatably mounted in the frame, a locking mechanism sensitive at least to the belt webbing, a pretensioning drive (18) couplable to the belt reel, and a torsion bar (14) positioned coaxially in the belt reel, the first end of the torsion bar being connected to the belt reel in a non-rotational arrangement and its second end being connected in a non-rotational arrangement to a coupling disc (32) through which the second end of the torsion bar (14) is couplable in a webbing-sensitive manner in a non-rotational load-bearing arrangement to the frame (10), characterized in that the locking mechanism has at least one locking pawl (22, 24) mounted on an end face of the belt reel (12), said pawl being engageable into a locking toothing (30, 31) surrounding it and being disposed on the frame (10), and in that on the second end (14b) of the torsion bar (14) a control disc (42) is mounted for limited rotation, the control disc engaging with the locking pawl (22, 24) at least during the phase of energy conversion, thus preventing it from engaging with the locking toothing (30, 31) on the frame (10).

2. The belt retractor as claimed in claim 1, characterized in that the locking mechanism comprises an actuating disc (56) mounted with limited rotation on the second end (14b) of the torsion bar (14), said disc engaging the locking pawl (22, 24).

3. The belt retractor as claimed in claims 1 and 2, characterized in that the control disc (42) is positioned axially next to the end face of the belt reel (12) supporting the locking pawl (22, 24) and that the coupling disc (32) is positioned axially between the control disc (42) and the actuating disc (56).

4. The belt retractor as claimed in claim 3, characterized in that the actuating disc (56) comprises an axial control pin (64, 66) which extends through oblong holes in the coupling disc (32) and in the control disc (42) and engages the locking pawl (22, 24).

5. The belt retractor as claimed in claims 3 or 4, characterized in that the locking pawl (22, 24) comprises a cam (48, 50) projecting axially to the control disc (42) and the control disc (42) comprises a recess (52, 54) extending in the circumferential direction whose radially outer limiting wall (52a, 54a) engages behind the cam (48, 50) when the control disc (42) is twisted with respect to the second end of the torsion bar (14), thus preventing the deflection of the locking pawl (22, 24).

6. The belt retractor as claimed in claim 5, characterized in that the control disc (42) is biased by a return spring (44) in a rest position relative to the belt reel (12) and that the radially outer limiting wall at the entrance end of the recess (52, 54) for the cam (48, 50) of the locking pawl (22, 24) comprises a step (52b, 54b) directed radially inwards, said step engaging behind the cam of the locking pawl (22, 24) held deflected by mass inertia forces.

7. The belt retractor as claimed in claim 5, characterized in that the control disc (42) is maintained in a rest position relative to the belt reel (12) by a retaining means (80), yielding at high angular acceleration, and is maintained in its relatively twisted position by latching means (82, 84).

8. The belt retractor as claimed in any of the preceding claims, characterized in that on the end face of the belt reel (12) supporting the locking pawl (22, 24) there is formed an axially projecting support element (72, 74) for the load-bearing support of the locking pawl in the circumferential direction.

9. The belt retractor as claimed in any of the preceding claims, characterized in that on the coupling disc (32) at least one coupling pawl (34, 36) is swivably mounted, said pawl being surrounded by a blocking toothing (38) connected with the frame (10) in a load-bearing manner, and being engageable into the blocking toothing (38) due to its mass inertia.

10. The belt retractor as claimed in any of the preceding claims, characterized in that the pretensioning drive (18) engages the first end (14a) of the torsion bar (14).

11. The belt retractor as claimed in claim 6, characterized in that the rotation of the control disc (42) in the belt webbing wind-up direction is retarded by a spiral band spring (70).

## Revendications

1. Enrouleur de ceinture, qui présente un tendeur de ceinture intégré et un convertisseur d'énergie pour limiter la force qui s'exerce à la suite de la mise en tension de la ceinture, avec un cadre (10) qui supporte la charge, une bobine de ceinture (12) qui est montée de façon à pouvoir tourner dans le cadre, au moins un mécanisme de blocage sensitif à la sangle de la ceinture, un mécanisme d'entraînement du tendeur (18) que l'on peut accoupler à la bobine de la ceinture et une barre de torsion (14) disposée coaxialement dans la bobine de la ceinture, dont la première extrémité est reliée de façon solidaire en rotation avec la bobine de la ceinture et dont la seconde extrémité est reliée de façon solidaire en rotation avec un disque d'embrayage (32), grâce auquel la seconde extrémité de la barre de torsion (14) peut être accouplée, sans pouvoir tourner, au cadre (10) de façon sensitive à la sangle de la ceinture et en supportant la charge, enrouleur de ceinture caractérisé en ce que le mécanisme de blocage présente au moins un cliquet d'arrêt (22, 24) monté sur une face frontale de la bobine (12) de la ceinture, cliquet qui peut être engagé dans une denture d'arrêt (30, 31) sur le cadre (10), et en ce que sur la seconde extrémité (14b) de la barre de torsion (14) un disque de commande (42), qui vient en prise sur le cliquet d'arrêt (22, 24) au moins pendant la phase de conversion de l'énergie et empêche le cliquet de venir en prise dans la denture d'arrêt (30, 31) du cadre (10), est monté de façon à pouvoir tourner de façon limitée.

2. Enrouleur de ceinture selon la revendication 1, caractérisé en ce que le mécanisme de blocage présente un disque de libération (56), monté de manière à pouvoir tourner de façon limitée sur la seconde extrémité (14b) de la barre de torsion (14), disque de libération qui vient en prise sur le cliquet d'arrêt (22, 24).

3. Enrouleur de ceinture selon les revendications 1 et 2, caractérisé en ce que le disque de commande (42) est disposé axialement à côté de la face frontale de la bobine de la ceinture (12) qui supporte le cliquet d'arrêt (22, 24) et en ce que le disque d'embrayage (32) est disposé axialement entre le disque de commande (42) et le disque de libération (56).

4. Enrouleur de ceinture selon la revendication 3, caractérisé en ce que le disque de libération (56) présente une tige axiale de commande (64,66), qui s'étend à travers des trous oblongs dans le disque d'embrayage (32) et dans le disque de commande (42) et vient en prise sur le cliquet d'arrêt (22, 24).

5. Enrouleur de ceinture selon la revendication 3 ou 4, caractérisé en ce que le cliquet d'arrêt (22, 24) présente une came (48, 50) se dressant axialement en direction du disque de commande (42) et le disque de commande (42) présente un évidement (52, 54) qui s'étend dans le sens périphérique, évidement dont la paroi de délimitation (52a, 54a) radialement extérieure, quand le disque de commande (42) est tourné contre la seconde extrémité de la barre de torsion (14), vient en prise par derrière avec la came (48, 50) et empêche ainsi le cliquet d'arrêt (22,24) de se déployer.

6. Enrouleur de ceinture selon la revendication 5, caractérisé en ce que le disque de commande (42) est comprimé au préalable par un ressort de rappel (44) et mis en position de repos par rapport à la bobine de la ceinture (12) et en ce que la paroi de délimitation radialement extérieure présente à l'extrémité d'entrée de l'évidement (52, 54) un cran (52b,54b) orienté radialement vers l'intérieur pour la came (48, 50) du cliquet d'arrêt (22, 24), cran qui vient en prise par derrière avec la came du cliquet d'arrêt (22, 24) maintenu déployé par les forces d'inertie.

7. Enrouleur de ceinture selon la revendication 5, caractérisé en ce que le disque de commande (42) est maintenu par un moyen de fixation (80), qui **est retenu,** quand l'accélération en rotation devient élevée, dans une position de repos par rapport à la bobine de la ceinture (12) et est maintenu dans sa position relative de rotation par un moyen d'encliquetage (82, 84).

8. Enrouleur de ceinture selon l'une des revendications précédentes, caractérisé en ce que l'on forme sur la face frontale de la bobine de la ceinture (12), qui porte le cliquet d'arrêt (22, 24), un élément d'appui se dressant axialement (72, 74), qui sert d'appui, portant la charge, au cliquet d'arrêt dans le sens périphérique.

9. Enrouleur de ceinture selon l'une des revendications précédentes, caractérisé en ce que sur le disque d'embrayage (32) on monte au moins un cliquet d'embrayage (34, 36) de façon à ce qu'il puisse pivoter, cliquet d'embrayage qui est entouré par une denture de blocage (38) reliée en portant la charge au cadre (10) et qui peut s'engager par inertie dans la denture de blocage (38).

10. Enrouleur de ceinture selon l'une des revendications précédentes, caractérisé en ce que le mécanisme d'entraînement du tendeur (18) vient en prise sur la première extrémité (14a) de la barre de torsion (14).

11. Enrouleur de ceinture selon la revendication 6, caractérisé en ce que la rotation du disque de commande (42) est empêchée dans le sens de l'enroulement de la sangle de la ceinture par un ressort à ruban en forme de spirale (70).
